# EUROPÄISCHE PATENTSCHRIFT

(11) **EP 2 424 745 B1**
(45) Veröffentlichungstag und Bekanntmachung des Hinweises auf die Patenterteilung: **17.04.2013**
(21) Anmeldenummer: 10716767.8
(22) Anmeldetag: 23.04.2010
(51) Int. Cl.: B60L 11/18, G07C 5/00

(54) **VERFAHREN UND ANORDNUNG ZUR DATENKOMMUNIKATION ZWISCHEN EINEM DIENSTEANBIETER UND EINEM FAHRZEUG**
METHOD AND ARRANGEMENT FOR DATA COMMUNICATION BETWEEN A SERVICE PROVIDER AND A VEHICLE
PROCÉDÉ ET SYSTÈME DE TRANSMISSION DE DONNÉES ENTRE UN FOURNISSEUR DE SERVICES ET UN VÉHICULE

(30) Priorität: 02.05.2009 DE 102009019753
(43) Veröffentlichungstag der Anmeldung: 07.03.2012
(73) Patentinhaber: Daimler AG, 70327 Stuttgart (DE)
(72) Erfinder: FRISCH, Thomas, 71034 Böblingen (DE); KÖHLER, Michael, 14772 Brandenburg (DE); LOCHNER, Holger, 71645 Ludwigsburg (DE); SAALFELD, Christoph, 70597 Stuttgart (DE); SCHLUESENER, Tim, 70372 Stuttgart (DE)
(74) Vertreter: JENSEN & SON
(86) Internationale Anmeldenummer: PCT/EP2010/002503
(87) Internationale Veröffentlichungsnummer: WO 2010/127775

(56) Entgegenhaltungen:
- EP-A2- 1 394 921
- WO-A1-2009/039406
- US-A- 6 081 205

## Beschreibung

Die Erfindung betrifft ein Verfahren zur Datenkommunikation zwischen einem Diensteanbieter und einem Fahrzeug mit elektrischem Antrieb gemäß dem Oberbegriff des Anspruchs 1 sowie eine Anordnung zur Datenkommunikation zwischen einem Diensteanbieter und einem Fahrzeug mit elektrischem Antrieb gemäß dem Oberbegriff des Anspruchs 7.

Moderne Fahrzeuge, insbesondere Elektrofahrzeuge und Hybridfahrzeuge, weisen häufig eine drahtlose Schnittstelle zur Datenkommunikation auf, über die Telematikdienste abgewickelt werden können.

Aus der DE 10 2008 022 771 A1 ist ein Verfahren und ein System zum Übertragen von Fahrzeug-Diagnosedaten zu einem Fahrzeug-Dienstleister bekannt. Dabei werden Sensoren zum Erzeugen von Sensorsignalen genutzt, die den Status bzw. die Beschaffenheit von Fahrzeugkomponenten anzeigen. Ein Diagnosemodul in dem Fahrzeug erzeugt Diagnosedaten auf Basis der Sensorsignale und überträgt die Diagnosedaten zu einem Kommunikationsmodul eines Telefon-Freisprechsystems in dem Fahrzeug. Das Kommunikationsmodul überträgt die Diagnosedaten unter Verwendung von Bluetooth-Kommunikation drahtlos zu einem Bluetooth-fähigen Mobiltelefon. Das Mobiltelefon überträgt die Diagnosedaten über das Internet zu einem Internet-Server, um festzustellen, ob eine der Fahrzeugkomponenten repariert oder gewartet werden muss. Der Dienstleister informiert einen Benutzer des Fahrzeugs über eine Fahrzeugkomponente, die repariert oder gewartet werden muss.

Aus der US 2009/0021385 A1 ist ein Verfahren zur Kommunikation mit einem elektrischen Fahrzeug offenbart. Das Verfahren umfasst einen Schritt, in dem ein Kommunikationsgerät im Fahrzeug installiert wird. Weiter wird eine Verbindung vom Fahrzeug zu einem Netzwerk aufgebaut und eine Batterie des elektrischen Fahrzeugs wird gesteuert und überwacht. EP1394921 sowie WO2009/039406 offenbaren Anordnungen zur Datenkommunikation zwichen einem Dienstenanbieter und einem elektrischen Fahrzeug gemäss dem Stand der Technik.

Es ist eine Aufgabe der Erfindung, ein verbessertes Verfahren und eine verbesserte Vorrichtung zur Datenkommunikation zwischen einem Fahrzeug und einem Diensteanbieter anzugeben.

Die Aufgabe wird erfindungsgemäß gelöst durch ein Verfahren mit den Merkmalen des Anspruchs 1 und durch eine Anordnung mit den Merkmalen des Anspruchs 12.

Vorteilhafte Weiterbildungen sind Gegenstand der Unteransprüche.

Bei einem erfindungsgemäßen Verfahren zur Datenkommunikation zwischen einem Diensteanbieter und einem Fahrzeug mit elektrischem Antrieb kann eine Kommunikationsverbindung zwischen dem Fahrzeug und dem Diensteanbieter über eine erste drahtlose Verbindung hergestellt werden. Wenn das Fahrzeug an der Ladestation über eine Ladeverbindung zum Laden eines im Fahrzeug vorgesehenen Akkumulators angeschlossen ist oder wird, wird eine weitere Kommunikationsverbindung zwischen dem Fahrzeug und dem Diensteanbieter über die Ladestation hergestellt.

Diese Datenverbindung lässt sich aufgrund der kurzen Distanz zwischen Fahrzeug und Ladestation zuverlässiger und mit höherer Bandbreite realisieren als die erste drahtlose Verbindung, die meist als Mobilfunkverbindung ausgebildet ist. Zudem fallen durch die Verbindung über die Ladestation geringere Verbindungskosten als über die Mobilfunkverbindung an und die Spannungsversorgung ist in jedem Fall durch die Ladestation sichergestellt, auch wenn das Fahrzeug/der Motor steht. Ebenso ist die Erreichbarkeit des parkenden Fahrzeugs über die Ladestation besser sichergestellt als mit einer Mobilfunkverbindung, insbesondere in einer Tiefgarage. Durch die hohe potentielle Bandbreite sind auch Dienste mit hoher Datenrate, wie Audio- und Videostreams möglich. Die hohe Robustheit und Verfügbarkeit der Verbindung mit geringer Abbruchwahrscheinlichkeit erlaubt Dienste wie Software-/Firmware-Updates von Fahrzeug- oder Infotainment-Komponenten (Steuergeräte, Rechnereinheiten), die nicht ohne gravierende Folgen abgebrochen werden dürfen. Dies ist insbesondere deswegen gefahrlos möglich, da während des Ladevorgangs sichergestellt ist, dass das Fahrzeug sich nicht im Fahrbetrieb befindet. Über die erste drahtlose Verbindung kann der Nutzer Software-Updates oder andere Dienste beim Diensteanbieter ordern.

Unter Fahrzeugen mit elektrischem Antrieb im Sinne der vorliegenden Erfindung sollen reine Elektrofahrzeuge und so genannte Plug-In-Hybride verstanden werden, die an eine Ladestation anschließbar sind, um den Akkumulator aufzuladen.

Die Kommunikationsverbindung zur Ladestation kann über die Ladeverbindung oder über eine separate Verbindung, auch eine zweite drahtlose Verbindung, hergestellt werden.

Vorzugsweise wird als Ladeverbindung eine drahtgebundene Verbindung genutzt. Denkbar ist jedoch auch eine induktive Verbindung. Die Kommunikationsverbindung auf der Ladeverbindung wird bevorzugt mittels einer Trägerfrequenzanlage etabliert. Trägerfrequenzanlagen sind auch als PLC (power line communication) bekannt. Dabei werden Kommunikationssignale auf eine Energieversorgungsleitung aufmoduliert, so dass diese mehrfach genutzt werden kann.

Die erste und/oder zweite drahtlose Verbindung können jeweils als eine Mobilfunkverbindung und/oder eine Bluetooth-Verbindung und/oder eine Ethernet-Verbindung ausgebildet sein. Insbesondere ist jedoch die erste drahtlose Verbindung eine Mobilfunkverbindung und die zweite drahtlose Verbindung eine Bluetooth-Verbindung oder eine Ethernet-Verbindung (beispielsweise WLAN).

Vorzugsweise ist beim Diensteanbieter ein Application-Server vorgesehen, in dem ein Datenaustausch über die erste drahtlose Kommunikationsverbindung und über die Kommunikationsverbindung über die Ladestation zusammengeführt, koordiniert und deren Status überwacht wird und auf dem die vom Diensteanbieter angebotenen Dienste vorgehalten werden. Der Application-Server kann mit der Ladestation über das Internet verbunden sein.

Insbesondere wird über die Datenkommunikation oder den Application Server mindestens einer der Dienste Diagnose, Wartung, Fahrzeugkonfiguration, Auswahl eines Ladeprofils, Uhrzeit der nächsten Nutzung, Freischaltung von Funktionen; Vorkonditionierung des Fahrzeugs, entferntes Software-Update von Fahrzeugfunktionen oder Infotainment-Systemen, Synchronisation oder Aktualisierung von Nutzdaten oder Daten eines Navigationssystems und/oder eines Adressbuchs und/oder eines Kalenders, Übertragung von Audio- und/oder Videodaten, Internet, Telefonie, entfernte Emissionsmessung bereitgestellt. Als Ladeprofile können beispielsweise Schnell-Ladung, kostengünstiges Laden oder batterieschonendes Laden vorgesehen sein. Unter Vorkonditionierung des Fahrzeugs können beispielsweise Komfortfunktionen wie Standklimatisierung oder - heizung verstanden werden.

Die Datenkommunikation kann unidirektional oder bidirektional durchgeführt werden.

Vorzugsweise wird über die Ladeverbindung eine weitere Kommunikationsverbindung mit einem Energieversorger hergestellt, beispielsweise zur Abrechnung der bezogenen Energie unabhängig vom Aufstellort der Ladestation (öffentlich oder privat).

Im Folgenden wird ein Ausführungsbeispiel der Erfindung anhand einer Zeichnung näher erläutert.

Dabei zeigt:

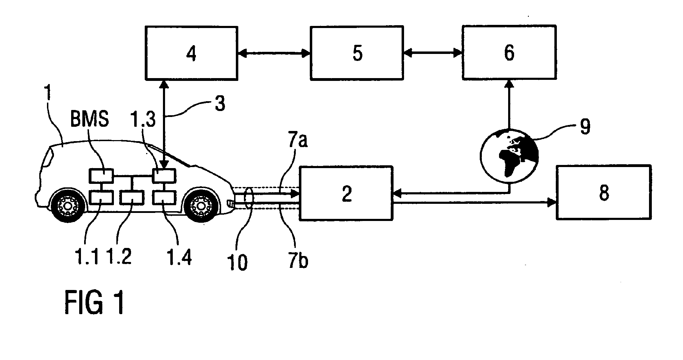

- Fig. 1: eine Anordnung zur Datenkommunikation zwischen einem Diensteanbieter und einem Fahrzeug mit elektrischem Antrieb.

In Figur 1 ist eine Anordnung zur Datenkommunikation zwischen einem Diensteanbieter und einem Fahrzeug 1 mit elektrischem Antrieb gezeigt.

Unter Fahrzeugen 1 mit elektrischen Antrieb im Sinne der vorliegenden Erfindung sollen reine Elektrofahrzeuge und so genannte Plug-In-Hybride verstanden werden, die an eine Ladestation 2 anschließbar sind, um einen Akkumulator 1.1 des Fahrzeugs über eine Ladeschaltung 1.2 aufzuladen, der der Versorgung des elektrischen Antriebs dient.

Das Fahrzeug weist Mittel 1.3 (Kommunikationseinheit) zur Herstellung einer Kommunikationsverbindung über eine erste drahtlose Verbindung 3 auf. Dies ist eine Punkt-zu-Punkt-Verbindung zwischen dem Fahrzeug 1 und einem mobilen Endgerät 4. Über diese Verbindung kann ein direkter Datenaustausch erfolgen.

Ein Kunde 5 oder ein Originalausrüstungshersteller (OEM - original equipment manufacturer) hat einerseits auf das mobile Endgerät 4 und andererseits auf einen beim Diensteanbieter angeordneten Application-Server 6 Zugriff. Der Datenaustausch zwischen Fahrzeug 1 und mobilem Endgerät 4 ist bidirektional und basiert beispielsweise auf einer Mobilfunkverbindung, einer Bluetooth-Verbindung oder einer Ethernet-Verbindung (vorzugsweise WLAN).

Zum Laden an der Ladestation 2 wird eine Ladeverbindung 10 zwischen Fahrzeug 1 und Ladestation 2 aufgebaut. Diese Ladeverbindung 10 wird mittels Trägerfrequenzverfahren (PLC) ebenfalls als Kommunikationsverbindung 7a, 7b benutzt. Hierzu ist im Fahrzeug eine Trägerfrequenzanlage 1.4 zur Modulation/Demodulation vorgesehen. Eine weitere Trägerfrequenzanlage ist in der Ladestation 2 angeordnet (nicht gezeigt).

Die Ladestation 2 ist ihrerseits mit einem Energieversorger 8 verbunden, sowohl zum Bezug der zum Laden erforderlichen Energie als auch zur Übertragung von Daten, beispielsweise zur Abrechnung der verbrauchten Energie. Des Weiteren ist die Ladestation 2 mittels DSL, GPRS oder einem anderen Datenübertragungsdienst mit dem Internet 9 verbunden.

Der Application-Server 6 kommuniziert auf diesem Wege sowohl über die erste drahtlose Verbindung 3 als auch über die Kommunikationsverbindung 7a (End-to-end-Kommunikation, Tunnelung der Daten zwischen Fahrzeug 1 und Application-Server 6) mit dem Fahrzeug 1.

Die Kommunikationsverbindung 7a, 7b zur Ladestation 2 kann über die Ladeverbindung 10 oder über eine separate Verbindung, auch eine zweite drahtlose Verbindung, hergestellt werden.

Die Ladeverbindung 10 kann eine drahtgebundene Verbindung oder eine induktive Verbindung sein.

Die erste drahtlose Verbindung 3 und/oder zweite drahtlose Verbindung können jeweils als eine Mobilfunkverbindung und/oder eine Bluetooth-Verbindung und/oder eine Ethernet-Verbindung ausgebildet sein.

Insbesondere wird über die Datenkommunikation oder den Application-Server mindestens einer der Dienste Diagnose, Wartung, Fahrzeugkonfiguration, Auswahl eines Ladeprofils, Uhrzeit der nächsten Nutzung, Freischaltung von Funktionen, Vorkonditionierung des Fahrzeugs, entferntes Software-Update von Fahrzeugfunktionen oder Infotainment-Systemen, Synchronisation oder Aktualisierung von Nutzdaten oder Daten eines Navigationssystems und/oder eines Adressbuchs und/oder eines Kalenders, Übertragung von Audio- und/oder Videodaten, Internet, Telefonie, entfernte Emissionsmessung vom Application-Server 6 bereitgestellt. Als Ladeprofile können beispielsweise Schnell-Ladung, kostengünstiges Laden oder batterieschonendes Laden vorgesehen sein. Unter Vorkonditionierung des Fahrzeugs können beispielsweise Komfortfunktionen wie Standklimatisierung oder-heizung verstanden werden.

Die Datenkommunikation kann über jede der Verbindungen 3, 7a, 7b unidirektional oder bidirektional durchgeführt werden.

## Patentansprüche

1. Verfahren zur Datenkommunikation zwischen einem Diensteanbieter und einem Fahrzeug (1) mit elektrischem Antrieb, wobei eine Kommunikationsverbindung zwischen dem Fahrzeug (1) und dem Diensteanbieter über eine erste drahtlose Verbindung (3) herstellbar ist,
**dadurch gekennzeichnet, dass**, wenn das Fahrzeug (1) an einer Ladestation (2) über eine Ladeverbindung (10) zum Laden eines im Fahrzeug (1) vorgesehenen Akkumulators (1.1) angeschlossen ist oder wird, eine weitere Kommunikationsverbindung (7a, 7b) zwischen dem Fahrzeug (1) und dem Diensteanbieter über die Ladestation (2) hergestellt wird,
und dass mittels eines beim Diensteanbieter vorgesehenen Application-Servers (6) ein Datenaustausch über die erste drahtlose Verbindung (3) und über die Kommunikationsverbindung (7a) über die Ladestation (2) zusammengeführt und koordiniert werden.

2. Verfahren nach Anspruch 1,
**dadurch gekennzeichnet, dass** die Kommunikationsverbindung (7a, 7b) zur Ladestation (2) über die Ladeverbindung (10) hergestellt wird.

3. Verfahren nach einem der vorhergehenden Ansprüche,
**dadurch gekennzeichnet, dass** über die Datenkommunikation oder den Application-Server mindestens einer der Dienste Diagnose, Wartung, Fahrzeugkonfiguration, Auswahl eines Ladeprofils, Uhrzeit der nächsten Nutzung, Freischaltung von Funktionen , Vorkonditionierung des Fahrzeugs, entferntes Software-Update von Fahrzeugfunktionen oder Infotainment-Systemen, Synchronisation oder Aktualisierung von Daten eines Navigationssystems und/oder eines Adressbuchs und/oder eines Kalenders, Übertragung von Audio- und/oder Videodaten, Internet, Telefonie, entfernte Emissionsmessung bereitgestellt wird.

4. Verfahren nach einem der vorhergehenden Ansprüche,
**dadurch gekennzeichnet, dass** die Datenkommunikation unidirektional oder bidirektional durchgeführt wird.

5. Verfahren nach einem der vorhergehenden Ansprüche,
**dadurch gekennzeichnet, dass** über die Ladeverbindung (10) eine weitere Kommunikationsverbindung (7b) mit einem Energieversorger (8) etabliert wird.

6. Verfahren nach einem der vorhergehenden Ansprüche,
**dadurch gekennzeichnet, dass** der Application-Server (6) über das Internet (9) mit der Ladestation (2) verbunden wird.

7. Anordnung zur Datenkommunikation zwischen einem Diensteanbieter und einem Fahrzeug (1) mit elektrischem Antrieb, umfassend Mittel (1.3) zum Herstellen einer Kommunikationsverbindung zwischen dem Fahrzeug (1) und dem Diensteanbieter über eine erste drahtlose Verbindung (3),
**dadurch gekennzeichnet, dass** Mittel (1.4) zum Herstellen einer weiteren Kommunikationsverbindung (7a, 7b) über eine Ladestation (2) vorgesehen sind, an der ein im Fahrzeug (1) vorgesehener Akkumulator (1.1) über eine Ladeverbindung (10) aufladbar ist,
und dass beim Diensteanbieter ein Application-Server (6) vorgesehen ist, mittels dessen ein Datenaustausch über die erste drahtlose Kommunikationsverbindung (3) und über die Kommunikationsverbindung (7a, 7b) über die Ladestation (2) zusammenführbar und koordinierbar ist.

8. Anordnung nach Anspruch 7,
**dadurch gekennzeichnet,**
**dass** die Kommunikationsverbindung (7a, 7b) zur Ladestation (2) über die Ladeverbindung (10) erfolgt.

9. Anordnung nach einem der Ansprüche 7 bis 8 ,
**dadurch gekennzeichnet, dass** der Application-Server (6) über das Internet (9) mit der Ladestation (2) verbindbar ist.

10. Anordnung nach einem der Ansprüche 7 bis 9,
**dadurch gekennzeichnet,**
**dass** über die Datenkommunikation oder den Application-Server (6) mindestens einer der Dienste Diagnose, Wartung, Fahrzeugkonfiguration, Auswahl eines Ladeprofils, Uhrzeit der nächsten Nutzung, Freischaltung von Funktionen , Vorkonditionierung des Fahrzeugs, entferntes Software-Update von Fahrzeugfunktionen oder Infotainment-Systemen, Synchronisation oder Aktualisierung von Daten eines Navigationssystems und/oder eines Adressbuchs und/oder eines Kalenders, Übertragung von Audio- und/oder Videodaten, Internet, Telefonie, entfernte Emissionsmessung bereitgestellt wird.

## Claims

1. Method for data communication between a service provider and a vehicle (1) having an electric drive, wherein a communication link between the vehicle (1) and the service provider can be established via a first wireless link (3),
**characterised in that** a further communication link (7a, 7b) between the vehicle (1) and the service provider is established via the charging station (2) if the vehicle (1) is connected or being connected via a charging link (10) to a charging station (2) for charging an accumulator (1.1) provided in the vehicle (1), and **in that**, by means of an application server provided at the service provider, a data exchange is conducted and coordinated via the first wireless link (3) and via the communication link (7a) across the charging station (2).

2. Method according to claim 1,
**characterised in that** the communication link (7a, 7b) to the charging station (2) is established via the charging link (10).

3. Method according to any of the preceding claims,
**characterised in that** via the data communication or the application server at least one of the services of diagnostics, maintenance, vehicle configuration, selection of charging profile, time of next use, enabling of functions, preconditioning of the vehicle, remote software update of vehicle functions or infotainment systems, synchronisation or updating of data of a navigation system and/or an address book and/or a calendar, transmission of audio and/or video data, internet, telephone, remote emission measuring is made available.

4. Method according to any of the preceding claims,
**characterised in that** the data communication is unidirectional or bidirectional.

5. Method according to any of the preceding claims,
**characterised in that** a further communication link (7b) to an energy supplier (8) is established via the charging link (10).

6. Method according to any of the preceding claims,
**characterised in that** the application server (6) is connected to the charging station (2) via the internet (9).

7. Arrangement for data communication between a service provider and a vehicle (1) having an electric drive, comprising means (1.3) for establishing a communication link between the vehicle (1) and the service provider via a first wireless link (3),
**characterised in that** means (1.4) are provided for establishing a further communication link (7a, 7b) via a charging station (2) where an accumulator (1.1) provided in the vehicle (1) can be charged via a charging link (10),
and **in that** an application server (6) is provided at the service provider, by means of which application server (6) a data exchange is conducted and coordinated via the first wireless link (3) and via the communication link (7a) across the charging station (2).

8. Arrangement according to claim 7,
**characterised in that** the communication link (7a, 7b) to the charging station (2) is established via the charging link (10).

9. Arrangement according to claim 7 or 8,
**characterised in that** the application server (6) can be connected to the charging station (2) via the internet (9).

10. Arrangement according to any of claims 7 to 9,
**characterised in that** via the data communication of the application server (6) at least one of the services of diagnostics, maintenance, vehicle configuration, selection of charging profile, time of next use, enabling of functions, preconditioning of the vehicle, remote software update of vehicle functions or infotainment systems, synchronisation or updating of data of a navigation system and/or an address book and/or a calendar, transmission of audio and/or video data, internet, telephone, remote emission measuring is made available.

## Revendications

1. Procédé pour transmettre des données entre un fournisseur de services et un véhicule (1) équipé d'un moteur électrique, une liaison de communication pouvant être établie entre le véhicule (1) et le fournisseur de services par l'intermédiaire d'une première liaison sans fil (3), **caractérisé en ce que**, lorsque le véhicule (1) est raccordé à une station de rechargement (2) par le biais d'une liaison de charge (10) permettant de recharger une batterie (1.1) situé dans le véhicule (1), une seconde liaison de communication (7a, 7b) est établie entre le véhicule (1) et le fournisseur de services par l'intermédiaire de la station de rechargement (2), et **en ce qu'**un serveur d'application (6) situé chez le fournisseur de services permet de réunir et coordonner une transmission de données par le biais de la première liaison sans fil (3) et par la liaison de communication (7a) via la station de rechargement (2).

2. Procédé selon la revendication 1, **caractérisé en ce que** la liaison de communication (7a, 7b) est établie avec la station de rechargement (2) par la liaison de charge (10).

3. Procédé selon l'une quelconque des revendications précédentes, **caractérisé en ce que** par la transmission de données ou le serveur d'application il est possible d'obtenir au moins l'un des services suivants : diagnostic, entretien, configuration du véhicule, sélection du profil de charge, heure de la prochaine utilisation, déconnexion des fonctions, traitement préliminaire du véhicule, mise à jour à distance des fonctions du véhicule par logiciel ou système d'infodivertissement, synchronisation ou mise à jour de données d'un système de navigation et/ou d'un carnet d'adresses et/ou d'un calendrier, transmission de données audio et/ou vidéo, Internet, téléphonie, mesure d'émission à distance.

4. Procédé selon l'une quelconque des revendications précédentes, **caractérisé en ce que** la transmission de données est unidirectionnelle ou bidirectionnelle.

5. Procédé selon l'une quelconque des revendications précédentes, **caractérisé en ce qu'**une seconde liaison de communication (7b) est établie avec le fournisseur d'énergie (8) par la liaison de charge (10).

6. Procédé selon l'une quelconque des revendications précédentes, **caractérisé en ce que** le serveur d'application (6) est relié à la station de rechargement (2) par Internet (9).

7. Système de transmission de données entre un fournisseur de services et un véhicule (1) équipé d'un moteur électrique, comprenant un moyen (1.3) servant à établir une liaison de communication entre le véhicule (1) et le fournisseur de services par le biais d'une première liaison sans fil (3), **caractérisé en ce qu'**il est prévu des moyens (1.4) servant à établir une autre liaison de communication (7a, 7b) par l'intermédiaire d'une station de chargement (2), dans laquelle une batterie (1.1) située dans le véhicule (1) peut être rechargée via la liaison de charge (10), et **en ce qu'**un serveur d'application (6) est prévu auprès du fournisseur de service, lequel serveur d'application peut réunir et coordonner une transmission de données par le biais de la première liaison de communication sans fils (3) et par la liaison de communication (7a, 7b) via la station de chargement (2).

8. Système selon la revendication 7, **caractérisé en ce que** la liaison de communication (7a, 7b) est établie avec la station de rechargement (2) par la liaison de charge (10).

9. Procédé selon l'une quelconque des revendications 7 à 8, **caractérisé en ce que** le serveur d'application (6) peut être relié à la station de rechargement (2) par Internet (9).

10. Procédé selon l'une quelconque des revendications 7 à 9, **caractérisé en ce que** par la transmission de données ou le serveur d'application il est possible d'obtenir au moins l'un des services suivants : diagnostic, entretien, configuration du véhicule, sélection du profil de charge, heure de la prochaine utilisation, déconnexion des fonctions, traitement préliminaire du véhicule, mise à jour à distance des fonctions du véhicule par logiciel ou système d'infodivertissement, synchronisation ou mise à jour de données d'un système de navigation et/ou d'un carnet d'adresses et/ou d'un calendrier, transmission de données audio et/ou vidéo, Internet, téléphonie, mesure d'émission à distance.
